# EUROPEAN PATENT SPECIFICATION

(11) **EP 3 893 257 B1**
(45) Date of publication and mention of the grant of the patent: **17.04.2024**
(21) Application number: 21153578.6
(22) Date of filing: 26.01.2021
(51) Int. Cl.: H01F 27/32, H01F 30/02, H01F 30/14, H02M 5/14

(54) **AUTOTRANSFORMER RECTIFIER UNIT WINDING ARRANGEMENT**
WICKLUNGSANORDNUNG FÜR AUTOTRANSFORMATOR-GLEICHRICHTER-EINHEIT
AGENCEMENT D'ENROULEMENT D'UNITÉ DE REDRESSEUR AUTOTRANSFORMATEUR

(30) Priority: 09.04.2020 GB 202005307
(43) Date of publication of application: 13.10.2021
(73) Proprietor: Hamilton Sundstrand Corporation, Charlotte, NC 28217-4578 (US)
(72) Inventor: KULSANGCHAROEN, Ponggorn, Solihull, West Midlands B90 3ET (GB); DAY, Aaron, Borough Green, TN15 8QT (GB)
(74) Representative: Dehns

(56) References cited:
- CN-A- 106 653 300
- CN-A- 108 364 762
- CN-A- 110 739 865
- US-A1- 2016 307 685

## Description

### TECHNICAL FIELD

The present disclosure is concerned with an auto-transformer rectifier unit (ATRU) having a transformer coil structure.

### BACKGROUND

Many loads connected to AC supplies require DC power and convert the AC power into DC power.

This is common, for example, in aircraft in which the aircraft is equipped with an internal 3-phase network. The frequency of the electric current over the power supply network can be varied.

Electric power systems onboard aircraft are generally powered by generators that use rotation of the aircraft engine to generate AC power, usually 230V 400 Hz AC power. Often, onboard equipment require DC power rather than AC power and so a power converter or rectifier unit is usually provided to provide a suitable rectified DC output to them. Known diode pair rectification can cause current harmonics which are undesirable. To reduce such harmonics, multi-phase auto-transformer rectifier units ATRUs can be used to increase the number of AC phases supplied to the rectifier units. For example, 12-pulse ATRUs transform 3-phase AC input into six phases; 18-pulse ATRUs convert 3-phase AC to nine phases.

The transformer typically includes electrically conductive windings including a primary winding that induces electrical current flow into one or more secondary windings. The windings are typically wound around a core.

As indicated above, the transformer can be constructed using different winding schemes and topologies e.g. 12-pulse, 18-pulse, 24-pulse etc.

The windings when energized at full load generate a large amount of heat that has to be dissipated to avoid overheating of the unit. The thermal performance is linked to the allowable temperature of the winding insulation and the effectiveness of the cooling methodology to dissipate the heat generated from the windings. In typical units the winding thermal limitations result in an oversized core, therefore increasing the size and weight of the ATRU as a whole. In aircraft, there is a need to minimise the size and weight of components wherever possible. ATRUs are disclosed in CN 108 364 762 and CN 106 653 300.

Various solutions have been designed for improved heat dissipation, other than larger cores, including external cooling devices, heat sinks and re-arranging the hottest wire as the outer winding layer, but these typical solutions increase size and/or weight of the ATRU and/or adversely affect electrical performance.

There is a need for an ATRU winding arrangement that provides an improved solution for dissipating heat in the windings without the penalties of increased weight and complexity that other cooling solutions cause.

### SUMMARY

The arrangement of the disclosure provides for natural or passive cooling that addresses the problems of the known arrangements.

According to one aspect of the disclosure, there is provided an ATRU as defined by claim 1.

For a 12-pulse transformer, the primary winding may be separated into two columns separated by a gap, wherein the primary winding is separated into two parts, a first part in a first of the two columns and a second part in a second of the two columns and whereby the first secondary winding is wound with the first part of the primary winding in the first column and the second secondary winding is wound with the second part of the primary winding in the second column.

For an 18-pulse transformer, the primary winding comprises a first beta part, a second beta part and a gamma part between the first and second beta parts and the primary winding is separated into two columns by separating the gamma part into first and second gamma parts and wherein a first column comprises the first gamma part, the first beta part and the first secondary winding and the second column comprises the second gamma part, the second beta part and the second secondary winding.

Although described for 12- and 18-pulse transformers, the concept may also be applied to other multi-pulse ATRUs.

In some embodiments, the windings may be separated into more than two columns with respective gaps between adjacent columns.

The gaps may be filled with a thermally conductive dielectric material which not only fills the gap between the winding columns but also provides a path for the material to penetrate in and around the windings thus substantially improving the effective thermal conductivity of the whole structure. The material may be an epoxy resin or a potting material e.g. potting ceramic.

Also disclosed is a method according to claim 9 of forming a transformer coil structure of an autotransformer rectifier unit comprising forming the primary and secondary windings around the coil in two winding columns separated by a gap.

The method may further involve filling the gap with a heat transfer material.

In one embodiment, the method may involve vacuum filling the gap with epoxy resin.

### BRIEF DESCRIPTION OF THE DRAWINGS

Preferred embodiments of the arrangement will now be described by way of example only, with reference to the drawings.
Figure 1A is a schematic of an auto-transformer winding structure for a 12-pulse ATRU.
Figure 1B is a schematic of an auto-transformer winding structure for an 18-pulse ATRU.
Figure 2 is a sectional view showing the winding layers for a structure such as shown in Fig. 1A.
Figure 3 is a sectional view showing the winding layers for a structure such as shown in Fig. 1B.
Figure 4 is a sectional view showing the winding layers for a 12-pulse ATRU structure according to this disclosure.
Figure 5 is a sectional view showing the winding layers for an 18-pulse ATRU structure according to this disclosure.
Figure 6 is a schematic of an auto-transformer winding structure for a 12-pulse ATRU according to this disclosure.
Figure 7 is a schematic of an auto-transformer winding structure for an 18-pulse ATRU according to this disclosure.

### DETAILED DESCRIPTION

The described embodiments are by way of example only. The scope of this disclosure is limited only by the claims.

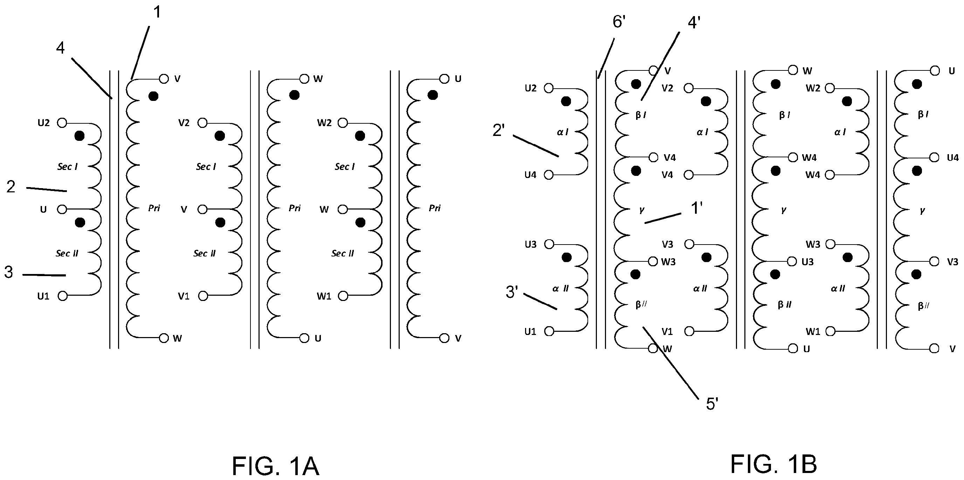

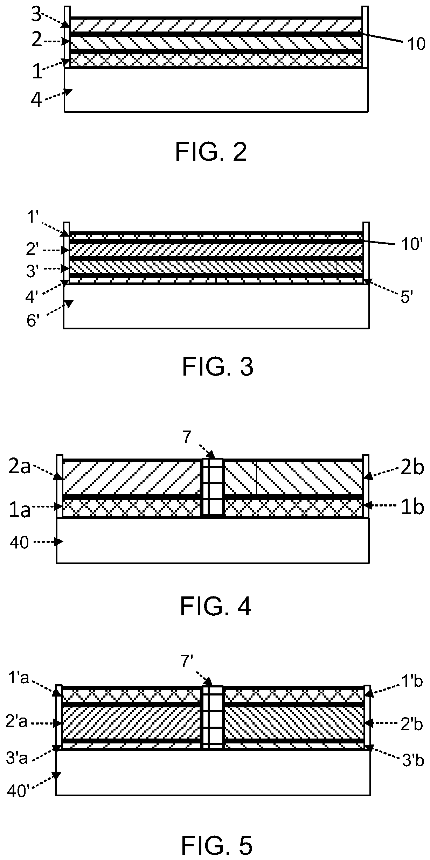

Typical ATRU windings structures for 12 and 18 pulse units will be described first, by way of background not encompassed by the wording of the claims, with reference to Figs. 1A, 1B, 2 and 3. 12-pulse systems comprise two six-pulse systems. For a typical 12-pulse ATRU, for each phase of the AC three-phase supply, a primary winding 1 is wound around a core 4. A first secondary winding 2, and a second secondary winding 3 are wound around the core 4 adjacent the primary winding 1. An insulating layer 10, e.g. a layer of polyamide film or tape, is provided between the windings for insulation. As shown in Figs. 1A and 2.

An 18-pulse system comprises three six-pulse systems. In a typical 18-pulse ATRU, for each phase, the primary winding comprises first and second beta windings 4', 5' and gamma winding 1' wound around the core 6' between which are wound the secondary windings alpha I 2' and alpha II 3' as shown in Figs. 1B and 3. An insulation layer 10' is provided between the windings.

As mentioned above, with such structures, the heat generated in the windings has to be dissipated through the windings and insulation layers and the core with, if needed, additional cooling systems. This leads to the problems mentioned above.

The modified winding arrangement according to this disclosure separates the windings into multiple columns around the core with the columns separated from each other by a respective gap that allows for heat transfer from the windings through the gap. The gap is preferably filled with a heat transfer material, which is ideally a high thermal conductivity dielectric material. The gap should be large enough to provide a good thermal path for dissipative heat but not so wide that it has an adverse effect on the number of winding layers required to satisfy the electrical requirements. If the gap is too wide, more winding layers would be needed thus leading to an unacceptable increase in the overall depth of the unit.

In some embodiments, the heat transfer material in the gap is the epoxy resin or potting material that is already used anyway to coat or pot the component. This means that the usual finishing process can be used and the resin or potting material that would usually be applied over the component to finish it will penetrate into and fill the gap to provide the heat dissipation function. In this way, no additional materials or processing steps are required. Such materials are known to improve thermal conductivity but in arrangements such as shown in Figs 2 and 3, the material's properties are not fully exploited as they are not able to penetrate the winding layers and reach to the deepest part of the windings (e.g. at the middle point).

In some embodiments, a resin may be applied under vacuum such as to penetrate laterally into the windings via the gap.

The concept is illustrated in the embodiments of the invention shown in Figs 4 to 7. The embodiments separate the windings into two columns separated by a gap. In other embodiments, the windings could be separated into more than two columns, adjacent columns separated by respective gaps.

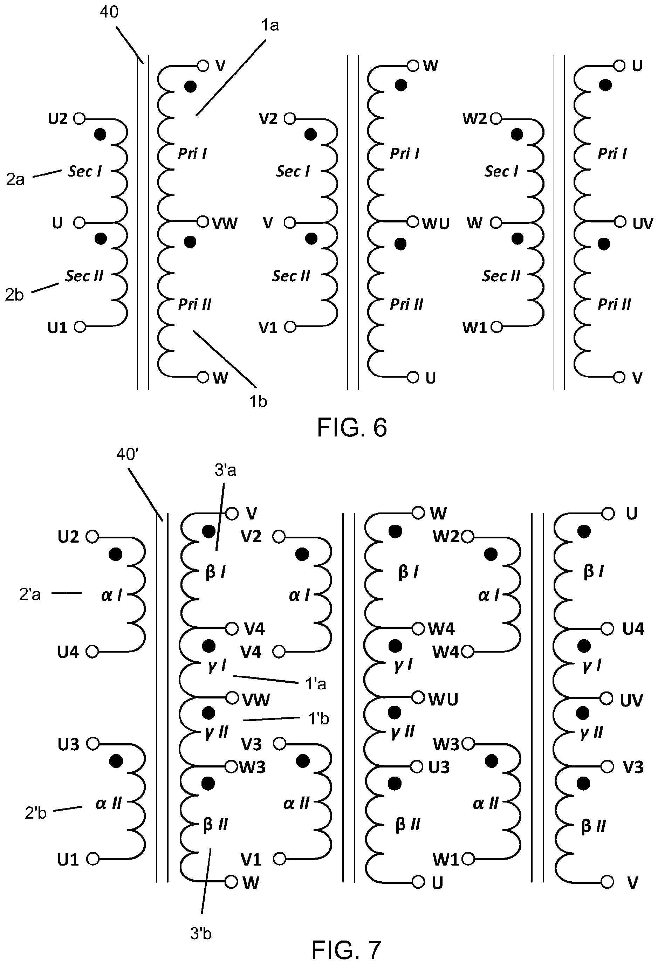

Figs. 4 and 6 show an example of a 12-pulse ATRU winding structure. Here, the windings are separated into two columns wound around the core 40; a first column formed of a first part of the primary winding 1a and the first secondary winding 2a, and a second column formed of a second part of the primary winding 1b and the second secondary winding 2b - i.e. the primary winding is separated into two parts (at point VW, WU and UV in Fig. 6) and the secondary windings are separated into two columns. The columns are separated by a gap 7 containing heat transfer material. The two parts of the primary winding are connected externally as a single primary winding.

Figs. 5 and 7 show the concept applied to an 18-pulse ATRU, wherein the gamma winding is split into two parts 1'a and 1'b (at VW, WU and UV in Fig. 7) each in a separate column separated by a gap 7'. The first alpha winding 2'a and the first beta winding 3'a are also in the first column wound around the core 40'; the second alpha winding 2'b and the second beta winding 3.b are in the second column around the core 40'. The two parts of the gamma winding are connected externally as a single gamma winding.

By separating the windings into two or more columns separated by one or more gaps, the heat produced by all the windings, including the innermost windings, can dissipate through the gap/the material in the gap. In some examples, the epoxy resin used to finish the component utilise the gap 7 and 7' to penetrate the gap between each winding turn and act as the heat transfer material.

Each winding column can be manufactured separately which can reduce overall complexity and manufacturing costs. As no oversized core or additional cooling is required, the overall size and weight of the unit is minimised.

## Claims

1. An autotransformer rectifier unit having a transformer coil structure comprising a core (40) defining an axis around which is wound a primary winding (1a, 1b), and two secondary windings (2a, 2b) wound around the core over or under the primary winding in the radial direction, whereby the primary and secondary windings are separated into two or more columns along the axial direction of the core by one or more gaps (7) extending radially through the windings to the core.

2. An autotransformer rectifier unit as claimed in claim 1 being a transformer coil structure of a 12-pulse transformer, wherein the primary winding is separated into two columns separated by a gap, in that the primary winding is separated into two parts (1a, 1b), a first part in a first of the two columns and a second part in a second of the two columns and whereby the first secondary winding (2a) is wound with the first part of the primary winding in the first column and the second secondary winding (2b) is wound with the second part of the primary winding in the second column.

3. An autotransformer rectifier unit as claimed in claim 1 being a transformer coil structure of an 18-pulse transformer, wherein the primary winding comprises a first beta part (3'a), a second beta part (3'b) and a gamma part between the first and second beta parts and the primary winding is separated into two columns by separating the gamma part into first and second gamma parts (1'a, 1'b) and wherein a first column comprises the first gamma part, the first beta part and a first alpha winding (2'a) of the first secondary winding and the second column comprises the second gamma part, the second beta part and a second alpha winding (2'b) of the second secondary winding.

4. The autotransformer rectifier unit of any preceding claim, wherein the windings are separated into more than two columns with respective gaps between adjacent columns.

5. The autotransformer rectifier unit of any preceding claim, wherein the gap(s) is/are filled with an electrically insulating material having high thermal conductivity properties.

6. The autotransformer rectifier unit of claim 5, wherein the material is an epoxy material.

7. The autotransformer rectifier unit of claim 5, wherein the material is a potting material.

8. The autotransformer rectifier unit of claim 7, wherein the potting material is potting ceramic.

9. A method of forming a transformer coil structure of an autotransformer rectifier unit as claimed in any preceding claim, the method comprising forming the primary and secondary windings around the coil in two winding columns separated by a gap.

10. The method of claim 9, further comprising filling the gap with a heat transfer material.

11. The method of claim 9, comprising vacuum filling the gap with epoxy resin.

## Patentansprüche

1. Autotransformator-Gleichrichtereinheit, die eine Transformatorspulenstruktur aufweist, die einen Kern (40) umfasst, der eine Achse definiert und um den Folgendes gewickelt ist: eine Primärwicklung (1a, 1b) und zwei Sekundärwicklungen (2a, 2b), die um den Kern über oder unter der Primärwicklung in radialer Richtung gewickelt sind, wodurch die Primärwicklung und die Sekundärwicklungen in zwei oder mehr Säulen entlang der axialen Richtung des Kerns durch einen oder mehrere Spalte (7) getrennt sind, die sich radial durch die Wicklungen zu dem Kern erstrecken.

2. Autotransformator-Gleichrichtereinheit nach Anspruch 1, die eine Transformatorspulenstruktur eines 12-Impuls-Transformators ist, wobei die Primärwicklung in zwei durch einen Spalt getrennte Säulen getrennt ist, indem die Primärwicklung in zwei Teile (1a, 1b), einen ersten Teil in einer ersten der zwei Säulen und einen zweiten Teil in einer zweiten der zwei Säulen, getrennt ist, und wodurch die erste Sekundärwicklung (2a) mit dem ersten Teil der Primärwicklung in der ersten Säule gewickelt ist und die zweite Sekundärwicklung (2b) mit dem zweiten Teil der Primärwicklung in der zweiten Säule gewickelt ist.

3. Autotransformator-Gleichrichtereinheit nach Anspruch 1, die eine Transformatorspulenstruktur eines 18-Impuls-Transformators ist, wobei die Primärwicklung einen ersten Beta-Teil (3'a), einen zweiten Beta-Teil (3'b) und einen Gamma-Teil zwischen dem ersten und dem zweiten Beta-Teil umfasst und die Primärwicklung durch Trennen des Gamma-Teils in einen ersten und einen zweiten Gamma-Teil (1'a, 1'b) in zwei Säulen getrennt ist und wobei eine erste Säule den ersten Gamma-Teil, den ersten Beta-Teil und eine erste Alpha-Wicklung (2'a) der ersten Sekundärwicklung umfasst und die zweite Säule den zweiten Gamma-Teil, den zweiten Beta-Teil und eine zweite Alpha-Wicklung (2'b) der zweiten Sekundärwicklung umfasst.

4. Autotransformator-Gleichrichtereinheit nach einem der vorhergehenden Ansprüche, wobei die Wicklungen in mehr als zwei Säulen mit jeweiligen Spalten zwischen benachbarten Säulen getrennt sind.

5. Autotransformator-Gleichrichtereinheit nach einem der vorhergehenden Ansprüche, wobei der/die Spalt(e) mit einem elektrisch isolierenden Material mit hohen Wärmeleitfähigkeitseigenschaften gefüllt ist/sind.

6. Autotransformator-Gleichrichtereinheit nach Anspruch 5, wobei das Material ein Epoxidmaterial ist.

7. Autotransformator-Gleichrichtereinheit nach Anspruch 5, wobei das Material ein Vergussmaterial ist.

8. Autotransformator-Gleichrichtereinheit nach Anspruch 7, wobei das Vergussmaterial Vergusskeramik ist.

9. Verfahren zum Bilden einer Transformatorspulenstruktur einer Autotransformator-Gleichrichtereinheit nach einem der vorhergehenden Ansprüche, wobei das Verfahren Bilden der Primärwicklung und der Sekundärwicklungen um die Spule in zwei Wicklungssäulen umfasst, die durch einen Spalt getrennt sind.

10. Verfahren nach Anspruch 9, ferner umfassend Füllen des Spaltes mit einem Wärmeübertragungsmaterial.

11. Verfahren nach Anspruch 9, umfassend Vakuumfüllen des Spaltes mit Epoxidharz.

## Revendications

1. Unité de redresseur autotransformateur comportant une structure de bobine de transformateur comprenant un noyau (40) définissant un axe autour duquel est enroulé un enroulement primaire (1a, 1b), et deux enroulements secondaires (2a, 2b) enroulés autour du noyau au-dessus ou en-dessous de l'enroulement primaire dans la direction radiale, moyennant quoi les enroulements primaire et secondaire sont séparés en deux colonnes ou plus le long de la direction axiale du noyau par un ou plusieurs espaces (7) s'étendant radialement à travers les enroulements jusqu'au noyau.

2. Unité de redresseur autotransformateur selon la revendication 1, qui est une structure de bobine de transformateur d'un transformateur à 12 impulsions, dans laquelle l'enroulement primaire est séparé en deux colonnes séparées par un espace, en ce que l'enroulement primaire est séparé en deux parties (1a, 1b), une première partie dans une première des deux colonnes et une seconde partie dans une seconde des deux colonnes et moyennant quoi le premier enroulement secondaire (2a) est enroulé avec la première partie de l'enroulement primaire dans la première colonne et le second enroulement secondaire (2b) est enroulé avec la seconde partie de l'enroulement primaire dans la seconde colonne.

3. Unité de redresseur autotransformateur selon la revendication 1, qui est une structure de bobine de transformateur d'un transformateur à 18 impulsions, dans laquelle l'enroulement primaire comprend une première partie bêta (3'a), une seconde partie bêta (3'b) et une partie gamma entre les première et seconde parties bêta et l'enroulement primaire est séparée en deux colonnes en séparant la partie gamma en première et seconde parties gamma (1'a, 1'b) et dans laquelle une première colonne comprend la première partie gamma, la première partie bêta et un premier enroulement alpha (2'a) du premier enroulement secondaire et la seconde colonne comprend la seconde partie gamma, la seconde partie bêta et un second enroulement alpha (2'b) du second enroulement secondaire.

4. Unité de redresseur autotransformateur selon une quelconque revendication précédente, dans laquelle les enroulements sont séparés en plus de deux colonnes avec des espaces respectifs entre les colonnes adjacentes.

5. Unité de redresseur autotransformateur selon une quelconque revendication précédente, dans laquelle le ou les espaces sont remplis d'un matériau électriquement isolant présentant des propriétés de conductivité thermique élevées.

6. Unité de redresseur autotransformateur selon la revendication 5, dans laquelle le matériau est un matériau époxy.

7. Unité de redresseur autotransformateur selon la revendication 5, dans laquelle le matériau est un matériau d'enrobage.

8. Unité de redresseur autotransformateur selon la revendication 7, dans laquelle le matériau d'enrobage est de la céramique d'enrobage.

9. Procédé de formation d'une structure de bobine de transformateur d'une unité de redresseur autotransformateur selon une quelconque revendication précédente, le procédé comprenant la formation des enroulements primaire et secondaire autour de la bobine en deux colonnes d'enroulements séparées par un espace.

10. Procédé selon la revendication 9, comprenant en outre le remplissage de l'espace avec un matériau de transfert de chaleur.

11. Procédé selon la revendication 9, comprenant le remplissage sous vide de l'espace avec de la résine époxy.
